# EUROPEAN PATENT APPLICATION

(11) **EP 2 523 141 A1**
(43) Date of publication of application: **14.11.2012**
(21) Application number: 12165253.1
(22) Date of filing: 24.04.2012
(51) Int. Cl.: G06F 21/00, G06F 17/30

(54) **Method for determining multiple identities, and a corresponding server and terminal**

(30) Priority: 13.05.2011 FR 1101466
(71) Applicant: Alcatel Lucent, 75007 Paris (FR)
(72) Inventor: Hacid, Hakim, 91620 Nozay (FR); Maag, Maria Coralia Laura, 91620 Nozay (FR); Skraba, Ryan, 91620 Nozay (FR)
(74) Representative: Mouney, Jérôme

(57) **Abstract**

The invention pertains to a method of determining multiple digital identities of a user (U) of multiple platforms (5) within a communication network (1), characterized in that it comprises the following steps:
- data (D) is extracted related to multiple digital identities associated with terminals communicating with the platforms (5),
- based on the extracted data (D), information vectors (V1,..., Vn) respectively associated with the digital identities are calculated,
- the calculated vectors (V1,...,Vn) are compared, and
- the substantially similar vectors (V1,..., Vn) are determined, so as to identify the digital identities (IDi,IDJ) potentially associated with a single user (U).

The invention further pertains to a corresponding server for implementing such a method.

The invention further pertains to a corresponding terminal for validating digital identities identified by such a method.

## Description

The invention involves a method for determining multiple digital identities of a user within at least one communication network. The invention also involves a corresponding server for implementing such a method, as well as a corresponding user terminal.

Nowadays, the development of the Internet and computer technology has made it possible to work, play and exchange information in a virtual world. Generally speaking, virtual platforms such as virtual games or virtual meeting and discussion areas, particularly social networking or instant messaging platforms, are increasingly growing.

In such platforms, the users may communicate interactively with other users.

A user can regularly connect to several of these platforms, and can therefore have distinct digital identities.

Here, "digital identity" refers to all information such as the profile, graphical representations such as avatars or pseudonyms, whereby a user organizes his or her virtual or digital existence and/or evolution within such platforms.

The current challenge for users is to know how to manage their digital identities.

However, another challenge is to be protected from people with malicious intent who may attempt to pass themselves off as someone else. Particularly with respect to children or young people, some people may lie about their age and other personal data, and present themselves with a digital identity that does not reflect their real identity.

Additionally, users may use their multiple digital identities to leave comments about a brand, product or service. This may therefore easily alter the image and reputation of the brand, product or service, and reduce the effectiveness of awareness analysis operations carried out by companies by introducing a potentially non-negligible bias into the analyses.

The aim of the invention is therefore to propose a method that ensures the identification of similar digital identities from different platforms within a communication network, which potentially belong to the same user.

For this reason, the invention aims to have a method for determining multiple digital identities of a user of multiple platforms within a communication network, characterized according to the following steps:
- data is extracted based on multiple of digital identities associated with terminals communicating with the platforms,
- based on the extracted data, information vectors are calculated which are respectively associated with the digital identities,
- the calculated vectors are compared, and
- substantially similar vectors are determined, so as to identify the digital identities that may potentially be associated with a single user.

The identification of similar digital identities ensures the comparison of various data and thereby to verify a given digital identity, for example in response to an invitation on a social network.

Such a method particularly makes it possible to strengthen the protection of children by verifying the identity of a potential contact person, particularly on a social network.

This method may further comprise one or more of the following characteristics, taken separately or in combination:
- the platforms comprise social platforms;
- the extracted data comprises at least one piece of social link information from the following list:
   - the structure and density of a network of contacts of the plurality of digital identities,
   - the information related to the contacts profile of the plurality of digital identities,
   - the frequency of exchanges between contacts of a network of contacts of the plurality of digital identities,
   - the length of exchanges between contacts of a network of contacts of the plurality of digital identities,
   - the direction of exchanges between contacts of a network of contacts of the plurality of digital identities,
   - the type of exchanges between contacts of a network of contacts of the plurality of digital identities,
- the extracted data comprises at least one piece of metadata;
- the at least one piece of metadata belongs to the group comprising: information about the login time of a terminal associated with a digital identity with at least one of the platforms, the identifier of the terminal associated with a digital identity, the pseudonym used;
- the method comprises the following steps:
   - the identifier of the terminal associated with a digital identity is extracted,
   - based on that identifier, the geographic location of the terminal is determined, and
   - a geographic search area is defined within the vicinity of the determined location, and
   - the vector associated with the digital identity is compared with information vectors associated with digital identities whose terminal is located within the search area;
- the extracted data comprise at least one piece of semantic information related to a digital identity;
- the method comprises a preliminary step in which the semantics of comments associated with the digital identity are analyzed, and published on the platforms;
- the method comprises a step of detecting a user's handling error and the extracted data comprises at least one parameter representative of the error;
- the extracted data is saved within a database;
- the database is updated when an interaction is detected on a platform;
- substantially similar identities are determined by Bayes classification or with a clustering method;
- the message comprises an additional step within which a set of identified digital identities, potentially associated with the same user, are transmitted to a user of a terminal;
- the method comprises the following steps:
   - a validation request is transmitted to the user;
   - a response to the request is received,
   - the response is analyzed, and
   - the method is adapted based on the response.

The invention also pertains to a server for determining multiple digital identities of a user of multiple platforms within a communication network, **characterized in that** it comprises at least one processing means for:
- extracting data related to multiple digital identities associated with terminals communicating with the platforms,
- based on the extracted data, calculating information vectors which are respectively associated with the digital identities,
- comparing the calculated vectors,
- determining the substantially similar vectors, and
- identifying the digital identities potentially associated with the same user.

The invention also pertains to a communication terminal of a user of multiple platforms within a communication network, **characterized in that** it comprises at least one processing means for:
- receiving a set of digital identities potentially associated with a single user of the platforms, identified based on a method of determining multiple digital identities of a user of multiple platforms within a communication network,
- receiving a request to validate the received set, and
- transmitting a positive or negative response to the request, to a server for determining multiple digital identities of a user of multiple platforms within a communication network.

Other characteristics and advantages of the invention will become more clear upon reading the following description, given by way of example and not of limitation, with reference to the attached drawings, in which:
- Figure 1 represents in diagram form a communication network on which multiple communication terminals exchange data with platforms,
- Figure 2 represents in diagram form certain processing means of a server for identifying multiple digital identities that may belong to the same user of platforms of the network in Figure 1, and
- Figure 3 depicts in diagram form successive steps of a method for determining multiple digital identities of a user of platforms of the network in Figure 1.

Identical elements in each of these figures have the same references.

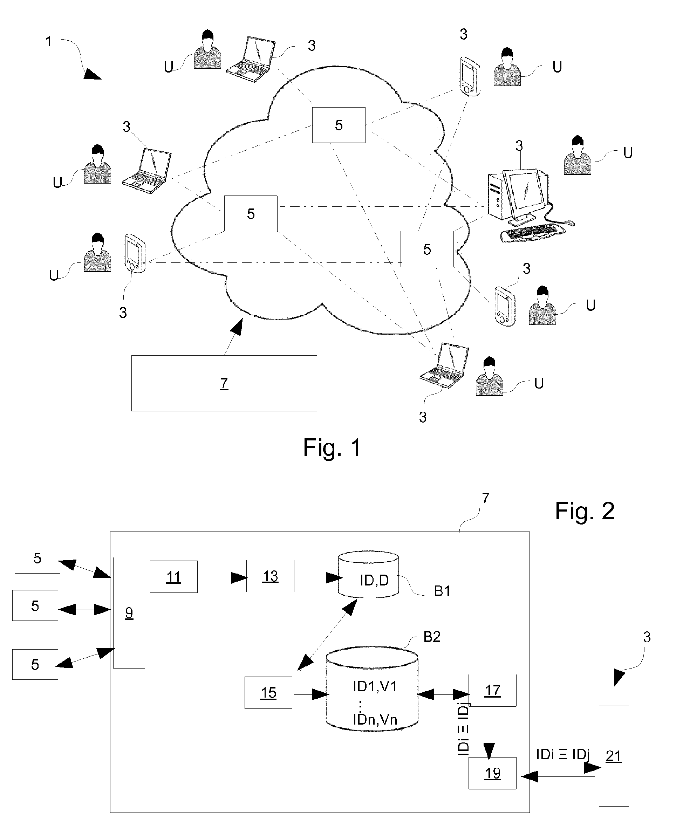

Figure 1 shows a communication network 1, for example the Internet, multiple communication terminals 3 and platforms 5.

Such a network 1 further comprises a server 7 for identifying multiple digital identities associated with a single user.

In this case "communication network" 1 shall mean any type of network capable of sending content to the terminals 3 and exchanging data or messages with the terminals 3. Any method of transmission can be envisaged.

Furthermore, in this case "communication terminal" 3 shall mean any type of equipment capable of receiving content from the communication network 1, and of exchanging data, messages and requests with the communication network 1.

It may for example be a mobile or landline telephone, a personal digital assistant (PDA), or a PC or laptop.

The platforms 5 are, for example, social networking platforms, such as networks of friends, networks of professional groups, or gaming networks, and/or instant messaging platforms. Naturally, any other platform that enables exchange between users U is conceivable.

Each platform 5 includes a group of users U. The group of users can comprise a list of the users' pseudonyms with, if desired, associated graphical representations or their corresponding profiles. These are digital identities of the users U.

Each platform 5 may comprise means of managing the various registered users who are authorized to connect to the platform 5.

The terminals 3 therefore exchange data with the platforms 5 on the communication network 1, as depicted by the dashed arrows in Figure 1. The users U of the terminals 3 may thereby connect to those social networks and/or instant messaging platforms, in order to exchange with the other users U such as by leaving comments, videos, or links, or discussing, or any other interaction between the users U.

Each user U may belong to one or more social networks. Thus, a single user U may have a separate digital identity for each social network to which he or she belongs.

It is notably legitimate for a user U to not use the same pseudonym, for example, or the same messaging address, for different networks of contacts, such as a professional network or a friends network.

Likewise, each user U may have one or more instant messaging services, and also a separate digital identity for each instant messaging service.

The server 7 comprises at least one processing means for identifying different digital identities that may be associated with a single user U.

With reference to Figure 2, a nonlimiting example embodiment of such a server 7 is described.

The server 7 comprises, for example, at least one connection interface 9 for establishing a connection between the server 10 and the platforms 5, and at least one processing means for exchanging data with the platforms 5.

This server 7 comprises, for example, at least one means of extracting 11 data D related to the digital identities ID stored on the platforms 5.

For that reason, such a means of extracting has access to the information flows on the platforms 5. To do so, these platforms 5 feature a specific API (short for *"Application Programming Interface"*) such as OpenSocial (a trademark) that enables this access to the information flow.

Once extracted, this data D is, for example, stored within a database B1 of the server 7. For that reason, the server 7 may comprise a means of saving 13 the extracted data D within the database B1 of the server 7.

The extracted data D comprises all useful information for identifying the multiple digital identities.

In social platforms, social networks, or instant messaging platforms, social link data may be extracted.

This refers to data representative of a user's network of contacts. For example, it may mean identifying a user's "friends", i.e. the people who belong to his or her network of contacts.

It may also mean the density of that social network, for example the number of "friends" or contacts of a user within his or her network, or the characteristics of the links that the user has with his or her contacts. For example, two contacts or "friends" may be very close friends who regularly and reciprocally communicate, but they may also be mere acquaintances or even have a practically one-way relationship in a celebrity-fan vein. The characteristics of the links, like the frequency of the exchanges, the length of the exchanges, or the direction of the exchanges with his or her contacts as well as the type of exchanges, for example by e-mail, by publishing a text or by instant messaging, may therefore provide information about the type of relationships that the user has with his or her contacts.

Thus, a structure of a user's network of contacts or social entourage may be established in order to study potential similarities between various digital identities, for example by finding overlaps between the contact network structures of the various digital identities.

Indeed, there is a noteworthy trend of a given user reproducing the same social circle across different social networks with which he or she is registered.

The extracted data may additionally comprise metadata, such as the login time or login time ranges over a given period, such as a month. The metadata may also comprise:
- the time when that user leaves comments on the social network or uses instant messaging,
- an identifier of the terminal 3 such as the IP address for *"Internet Protocol"*, or the IMEI address for *"International Mobile Equipment Identity"* associated with a mobile telephone, or the MAC address for *"Media Access Control address"* associated with the terminal, or
- the pseudonym used by a user.

The login time may give information about the login habits of the user U, and may make it possible to limit the search for other corresponding digital identities within a given time range.

Likewise, the identifier of the terminal 3, such as the IP address, may give location information and also make it possible to limit the search field to a geographic area around the location. This is because it is conceivable that when a user is traveling, there is a high likelihood that he or she will login to all of his or her social networks, for example, from that other place.

Finally, it is also conceivable that there will be a certain constancy in the pseudonym that is used. For example, on a professional network a user U who wants to be easily found in order to transact professional exchanges, is likely to state his or her identity clearly. His or her digital identity might be substantially close to his or her actual identity; for example, his or her digital identity may be "First Name Last Name". On the other hand, on a network of friends, the user U may, for example, choose just "First Name" as his or her identifier, potentially accompanied by an adjective or the initial of his or her first name or last name, or the initial of his or her first name followed by his or her last name, or just initials.

The extracted data may comprise structural information.

One example that may be cited is information about the location of the user associated with a digital identity whenever he or she logs into a platform 5, or information about the connection time.

As stated before, the location information may be used to limit the search for multiple identities to a predefined geographic search area, as shall be described below.

Such location information may be determined, for example, from extracted metadata, such as the IP address.

The information regarding the login times may also make it possible to refine the search. This is because a user may log in to his or her social networks and/or instant messaging sites at roughly the same time.

The extracted data may also comprise semantic information.

This is because a given user has a style of expression specific to him or her whenever he or she leaves comments or during a dialogue; particularly meaning a grammatical style, the vocabulary used, the length of the messages, and frequently used expressions.

It is conceivable that the user retains certain semantic habits even across different platforms 5.

The server 7 may therefore comprise means for semantically analyzing the comments or dialogue associated with a digital identity.

The extracted data may also comprise a parameter representative of a handling error of a user between multiple platforms 5.

This refers to a parameter due to a user's management error. This is because, as stated before, the user may log in at the same time to various social networks and/or instant messaging sites that he or she is registered with.

An error may then occur such that when intending to leave a comment on a social network, he or she leaves it on a different one.

To that end, the server 7 may comprise at least one processing means for:
- analyzing the comments or dialogs, or any other interaction, between users, and
- determining a linkage rate between those interactions.

Whenever one of the interactions, for example a response to a comment, does not seem to have any connection with the preceding comment, the server 7 may interpret that as an error by the user, who intended his or her response for a different platform 5.

The server 7 may then deduce that that user is at that time logged in to at least two different platforms 5.

Furthermore, the extraction means 11 may be configured to continuously extract data D associated with a digital identity ID.

For example, the server 7 may, for example, comprise a means of monitoring interactions of users U on the platforms 5, and once the new interaction has been detected, the extraction means 11 may extract the data related to that new detected interaction associated with a given digital identity.

A new interaction may, for example, be a new "friend" who joins the social network of a user U, a response to a comment, the publishing of a link or video, or an instant messaging chat.

Once the various data D, which is useful or likely to be useful for identifying multiple digital identities of a single user, has been extracted, the data D is therefore stored within the database B1.

This database B1 may, for example, list the various digital identities ID associated with the platforms 5, and for each listed digital identity ID, the corresponding extracted data D.

Furthermore, the server 7 comprises, for example, a means of calculating 15 an information vector based on the extracted data D. This way, each digital identity ID1,...,IDn is associated with a vector V1,..Vn.

Such a vector therefore comprises information specific to a given digital identity. This vector is called a descriptive vector of that digital identity.

Such a vector is enriched once a new interaction is detected incrementally on the platforms 5.

The digital identities and their associated descriptive vectors (ID1,V1 to IDn,Vn) are, for example, stored within a second database B2 of the server 7.

The server 7 may further comprise an aggregation means 17 for cross-checking the information associated with the various digital identities ID1,..IDn, such as by comparing the descriptive vectors V1,...,Vn, and determining the digital identities that seem similar IDi,IDj and therefore seem to belong to the same user.

The aggregation means 17 may, for example, uses the Bayes classification method or a clustering algorithm to determine the multiple identities. For example, a difference of vectors may be carried out.

The server 7 may also comprise a validation interface 19 for digital identities identified by the server 7 to be likely to refer to a single user U.

To do so, the server 7 or, for example, the interface 19 may comprise means of transmitting information related to the result of identifying multiple identities of a user on the network 1, for example to an additional interface 21 of a terminal 3 of an end user U.

The server 7 may therefore deliver that information to the terminal 3, for example in the form of a set of digital identities IDi,IDj, potentially associated with the same user U.

The server 7, and, for example, the interface 19, may also comprise means for transmitting a request to validate all of the digital identities identified by the server 7 transmitted to the terminal 3.

Naturally, to do so the server 7 comprises reception means capable of receiving a reply from the end user U transmitted by the terminal 3.

In this situation, the terminal 3, and, for example, the additional validation interface 21, may comprise means of receiving all of the digital identities transmitted by the server 7.

Whenever a validation request is transmitted by the server 7, the terminal 3 may also comprise means of receiving the validation request.

Additionally, the terminal 3 may comprise means of generating a positive or negative reaction, meaning one that validates or invalidates the matches identified by the server 7.

The terminal 3 further comprises means for transmitting a parameter representative of that reaction to the server 7.

Once that parameter representative of the end user's U reaction has been received, the server 7, for example more specifically the validation interface 19 of the server 7, may comprise means for analyzing that representative parameter in order to identify whether the user's response does or does not validate the identification of similar digital identities made by the server 7.

This reaction from the end user U is advantageously saved and taken into account later on, in order to improve the relevance of decisions made by the server 7 regarding the multiple digital identities of a single user U.

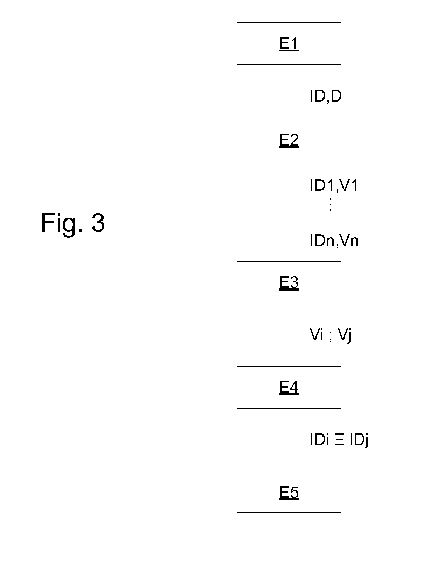

Now, with reference to Figures 1 to 3, the successive steps of a method for identifying multiple identities of a single user are described.

Thus, during a first step E1, data D is extracted related to multiple digital identities ID associated with terminals 3 communicating with the platforms 5 on the network 1.

For example, metadata, structural information, or semantic information, and/or potentially a parameter representative of a handling error of a user U, is extracted.

For example, the IP address of a terminal associated with a digital identification may be extracted as metadata, then based on that extracted address the geographic location of the terminal 3 may be determined, in order to outline a geographic search area for similar digital identities, in the vicinity of the determined location.

A preliminary step of analyzing the semantics of comments associated with a digital identity and published on a platform 5 may also be provided, so as to determine semantic information, such as the grammatical style, the vocabulary used, the writing style, or the frequently used expressions, or the jargon, or writing errors.

A preliminary step of analyzing the links of a digital identity's entourage may also be provided, within which the frequency, length, and/or direction of the digital identity's exchanges with its contacts, for example, may also be provided.

The extracted data D may be saved within a database B1.

The method may furthermore comprise an additional step of detecting an error by a user who publishes, for example on a platform 5, a comment, for example, that was intended for another platform 5. In this situation, a piece of data, or rather a parameter representative of that detected error, is extracted.

Based on the extracted data D, in step E2, a set of information associated with a digital identity ID1,...,IDn, is defined by calculating for each identity an associated vector V1,...,Vn.

These descriptive vectors and the associated digital identities may be stored within a database B2.

Next, in step E3, the sets of information, or for example more specifically the descriptive factors V1,...,Vn, are compared, and the sets of information, or for example the substantially similar descriptive vectors Vi,Vj, are determined, so as to identify in step E4 the digital identities IDi,IDj that are potentially associated with a single user.

Whenever a search area had previously been identified, the descriptive vectors V1,...,Vn, associated with digital identities whose terminal 3 was located in the search area are compared.

This determination of similar identities may be done by Bayes classification or by a clustering method.

This method is carried out continuously, so a step may, for example, be provided in which all new interaction on the platforms 5 is monitored, and the extraction of the associated data begins again, in order to identify multiple digital identities.

In this situation, the extracted data that is, for example, saved within the database B1 is updated. Thus, a step of updating the database B1 is provided.

Furthermore, an additional step E5 may be provided in which a set of digital identities IDi,IDj identified in step E4, potentially associated with a single user U, is transmitted to a user of a terminal.

A step of validating the result of the identification of multiple digital identities may also be provided for a single user U.

To do so, a validation request may be transmitted to the end user, for example the user U who requested via his or her terminal 3 the implementation of the method of identifying similar digital identities.

Via his or her terminal, the end user may generate a response and transmit that response, for example in the form of a representative parameter.

Whenever that response to the transmitted validation request is then received, the response may be analyzed, or more specifically, the representative parameter may be analyzed to identify whether the response validates or invalidates the result transmitted regarding the detection of multiple identities.

Next, that response is reinjected into the method, so as to enable self-learning and thereby adapt the method based on that response in order to improve the relevance of later identifications.

Such a method therefore makes it possible to detect multiple digital identities that may correspond to a single user.

Additionally, this protection may be carried out without having access to confidential information transmitted by the users when they register with the various social networks, for example.

What's more, the relevance of detections of multiple digital identities is improved due to self learning based on the responses of end users, which are reinjected within that method.

Thus, the embodiments of the present invention, by analyzing the information exchanged regarding a set of virtual platforms, make it possible to define a profile and thereby by comparing profiles, to detect multiple digital identities. As the detection of multiple digital identities makes it possible to improve users' safety against any users with malicious intent or to detect multiple comments coming from a single user that could hurt a brand or object's image for other users or for reputation analyses.

## Claims

1. A method of determining multiple digital identities of a user (U) of multiple platforms (5) within a communication network (1), **characterized in that** it comprises the following steps:
- data (D) is extracted based multiple digital identities associated with terminals communicating with the platforms (5),
- based on the extracted data (D), information vectors (V1,...,Vn) respectively associated with the digital identities are calculated,
- the calculated vectors (V1,...,Vn) are compared, and
- the substantially similar vectors (V1,...,Vn) are determined, so as to identify the digital identities (IDi,IDJ) potentially associated with a single user (U).

2. A method according to claim 1, **characterized in that** the platforms (5) comprise social platforms.

3. A method according to claim 2, **characterized in that** the extracted data (D) comprises at least one piece of social link information.

4. A method according to claim 3, **characterized in that** the at least one piece of social link information comprises at least one piece of information from the following list:
- the structure and density of a network of contacts of the plurality of digital identities,
- the information related to the contacts profile of the plurality of digital identities,
- the frequency of exchanges between contacts of a network of contacts of the plurality of digital identities,
- the length of exchanges between contacts of a network of contacts of the plurality of digital identities,
- the direction of exchanges between contacts of a network of contacts of the plurality of digital identities,
- the type of exchanges between contacts of a network of contacts of the plurality of digital identities,

5. A method according to one of the preceding claims, **characterized in that** the extracted data (D) comprises at least one piece of metadata.

6. A method according to claim 5, **characterized in that** the at least one piece of metadata belongs to the group comprising: information regarding the login time of a terminal associated with a digital identity with at least one of the platforms, the identifier of the terminal associated with a digital identity, and the pseudonym used.

7. A method according to claim 6, **characterized in that** it comprises the following steps:
- the identifier of a terminal (3) associated with a digital identity is extracted,
- based on that identifier, the geographic location of the terminal (3) is determined, and
- a geographic search area is defined within the vicinity of the determined location, and
- the vector associated with the digital identity is compared with information vectors associated with digital identities whose terminal (3) is located within the search area.

8. A method according to one of the preceding claims, **characterized in that** the extracted data (D) comprises at least one piece of semantic information related to a digital identity.

9. A method according to claim 8, **characterized in that** it comprises a preliminary step in which the semantics of comments associated with the digital identity and published on the platforms (5) are analyzed.

10. A method according to one of the preceding claims, **characterized in that** comprises a step of detecting a handling error by a user and **in that** the extracted data comprises at least one parameter representative of the error.

11. A method according to one of the preceding claims, **characterized in that** the extracted data (D) is saved within a database (B1).

12. A method according to claim 11, **characterized in that** the database (B1) is updated whenever an interaction is detected on a platform (5).

13. A method according to one of the preceding claims, **characterized in that** the substantially similar identities are determined by Bayes classification.

14. A method according to one of the preceding claims, **characterized in that** it comprises an additional step in which a set of identified digital identities (IDi,IDj), potentially associated with a single user (U), are transmitted to a user.

15. A method according to claim 14, **characterized in that** it comprises the following steps:
- a validation request is transmitted to the user;
- a response to the request is received,
- the response is analyzed, and
- the method is adapted based on the response.

16. A server for determining multiple digital identities of a user of multiple platforms within a communication network, **characterized in that** it comprises at least one processing means for:
- data (D) is extracted related to multiple digital identities associated with terminals communicating with the platforms (5),
- based on the extracted data (D), calculating information vectors (V1,...,Vn) respectively associated with the digital identities,
- comparing the calculated vectors (V1,...,Vn),
- determining the substantially similar vectors (V1,...,Vn) and
- identifying the digital identities (IDi,IDj) potentially associated with a single user (U).

17. A terminal of a user of multiple platforms within a communication network, **characterized in that** it comprises at least one processing means for:
- receiving a set of digital identities (IDi,IDj) potentially associated with a single user (U) of the platforms, identified based on a method of determining multiple digital identities of a user of multiple platforms within a communication network,
- receiving a request to validate the received set, and
- transmitting a positive or negative response to the request, to a server for determining multiple digital identities of a user of multiple platforms within a communication network.
